# EUROPÄISCHE PATENTSCHRIFT

(11) **EP 3 430 288 B1**
(45) Veröffentlichungstag und Bekanntmachung des Hinweises auf die Patenterteilung: **11.05.2022**
(21) Anmeldenummer: 17714653.7
(22) Anmeldetag: 15.03.2017
(51) Int. Cl.: F16H 25/24

(54) **STELLSPINDELANORDNUNG FÜR EINEN LINEARANTRIEB**
ADJUSTING SPINDLE ARRANGEMENT FOR A LINEAR DRIVE
ENSEMBLE BROCHE DE RÉGLAGE POUR UN ENTRAÎNEMENT LINÉAIRE

(30) Priorität: 16.03.2016 DE 102016104910
(43) Veröffentlichungstag der Anmeldung: 23.01.2019
(73) Patentinhaber: EJOT GmbH & Co. KG, 57319 Bad Berleburg (DE)
(72) Erfinder: HENTSCHEL, Andreas, 42551 Velbert (DE)
(74) Vertreter: Puschmann Borchert Kaiser Klettner Patentanwälte Partnerschaft mbB
(86) Internationale Anmeldenummer: PCT/EP2017/056142
(87) Internationale Veröffentlichungsnummer: WO 2017/158036

(56) Entgegenhaltungen:
- EP-A2- 1 978 266
- DE-A1-102008 051 544
- DE-A1-102010 041 791
- DE-A1-102010 062 532
- DE-U1-202006 014 117

## Beschreibung

Die Erfindung betrifft eine Stellspindelanordnung für einen Linearantrieb gemäß dem Oberbegriff des Anspruchs 1.

Die DE 10 2009 036 834 A1 offenbart eine Stelleinheit für einen Türantrieb umfassend eine Stellspindel, die üblicherweise aus Stahl hergestellt ist, die gemäß dieser Lehre jedoch aus einem Kunststoff hergestellt ist, insbesondere einem Flüssigkristallpolymer.

Die EP 1 978 266 A2 offenbart eine Stellspindel mit einem angespritzen Linearführungselement. Besonderes Augenmerk liegt dabei auf der Ausgestaltung der Endanschläge des Linearantriebs.

Die DE 10 2008 051 544 A1 offenbart eine Stelleineheit umfassend eine Gewindespindel, bei der die Kontaktflächen eines Linearführungselements mit einer Nut, als Kunststoffoberflächen ausgebildet sind. Die Linearführungselemente sollen sich elastsich verformbar gegen die Nut abstützen.

Die DE 10 2010 041 791 A1 betrifft ein Fahrzeugteil mit einer Gelenkaufnahme, wobei die Gelenkaufnahme formschlüssig dreh- und zugfest mit dem Fahrzeugteil verbunden ist, wobei die Gelenkaufnahme durch umspritzen des Fahrzeugteils hergestellt werden kann.

Eine Stellspindel für einen Linearantrieb in einem Türschließer umfasst bekanntermaßen einen gewindetragenden Schaft und ein Führungselement. Dieses Führungselement dient der Linearführung desselben und/oder zur Betätigung von Schaltelementen. Ferner weist der Schaft, insbesondere an seinem Ende, einen Anschlussbereich zum Anschluss eines Betätigungsmittels auf, wobei der gewindetragende Bereich des Schafts aus Metall hergestellt ist.

Durch die metallische Ausführung der Stellspindel ist ein daran angeformtes Führungselement nur aufwendig in vielstufigen Umformprozessen kaltumgeformt und/oder spanend herzustellen.

Es ist Aufgabe der Erfindung, eine Stellspindelanordnung mit einer Stellspindel aus Metall anzugeben, die sich in einem einfachen Umformprozess herstellen lässt.

Die Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

In bekannter Weise umfasst eine Stellspindelanordnung für einen Linearantrieb eine zuvor beschriebene metallische Stellspindel, welche durch ein Linearführungselement linear geführt ist. Erfindungsgemäß ist vorgesehen, dass das Linearführungselement aus Kunststoff ausgeführt ist, wobei dieses sowohl in axialer als auch in Umfangsrichtung formschlüssig mit der Stellspindel verbunden ist. Dies hat den Vorteil, dass der Metall-Schaft in einem zweistufigen Umformprozess (Doppeldruckverfahren) hergestellt werden kann, wodurch eine hohe Einsatzfestigkeit bei geringen Produktionskosten erreicht werden kann, da die Stellspindel ohne Linearführung eine vereinfachte Geometrie aufweist. Zudem kann durch die Kunststofflinearführung die notwendige Führungsfestigkeit durch den Kunststoff problemlos erreicht werden.

Die Linearführung ist erfindungsgemäß direkt auf die Stellspindel, insbesondere an ihrem freien Ende, aufgespritzt sein.

Die Stellspindel für einen Linearantrieb weist erfindungsgemäß einen Anschlussbereich auf, an welchem eine Formschlussstruktur vorgesehen ist, welche derart von dem Linearführungselement umschlossen ist, so dass eine drehsichere Verbindung gewährleistet wird. Die Formschlussstruktur ist am freien Ende, am Anschlussbereich, der Stellspindel angeordnet, wodurch die Ausformung der Formschlussstruktur ebenfalls innerhalb eines zweistufigen Umformprozesses ermöglicht wird.

Bevorzugt sind der gewindetragende Schaft und die Formschlussstruktur materialeinheitlich, insbesondere einstückig, ausgeführt.

Üblicherweise können die Formschlussstrukturen in Form eines Mehrkantprofils oder Mehrflügelprofils, ähnlich einem Torx^{®}-Profil, ausgeführt sein. Durch diese Formgebung kann eine einfache Umformung der Metallspindel erfolgen und eine drehsichere Verbindung mit dem Linearführungselement erzielt werden. Erfindungsgemäß sind die Formschlussstrukturen an dem dem Anschlussbereich der Stellspindel zugewandten Ende der Stellspindel vorgesehen, wo sie mit dem Linearführungselement in Eingriff stehen.

Das Linearführungselement ist erfindungsgemäß im Anschlussbereich derart ausgestaltet, dass das Betätigungsmittel durch das Linearführungselement wenigstens in Axialrichtung ebenfalls formschlüssig gehalten ist. So wird das Betätigungsmittel, wenn die Anformung des Linearführungselements durch ein Anspritzen an die Stellspindel erfolgt, im selben Arbeitsgang auch wenigstens teilweise mit umspritzt.

In vorteilhafter Weise kann wenigstens der gewindetragende Bereich der Stellspindel aus Stahl, insbesondere Edelstahl bestehen. Dadurch wird eine hohe Verschleißfestigkeit bei gleichzeitiger Korrosionsbeständigkeit gewährleistet.

Erfindungsgemäß ist das Betätigungsmittel als ein Seilzug, insbesondere ein Bowdenzug, ausgebildet.

Das der Stellspindel zugewandte Ende des Seilzugs, insbesondere Seele des Bowdenzugs, ist erfindungsgemäß von dem Linearführungselement derart umschlossen, dass der Seilzug in Axialrichtung formschlüssig mit der Stellspindel verbunden ist.

Gewindetragend im Sinne der Erfindung bedeutet wenigstens teilweise umlaufende Strukturen, die in Zusammenwirkung mit einem drehenden Getriebeelement eine Axialbewegung des Schaftes erzeugen können, sofern dieser linear geführt ist.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht einer erfindungsgemäßen Stellspindel in einem Führungsgehäuse,
- Fig. 2: eine erste Schnittansicht A-A einer erfindungsgemäßen Stellspindelanordnung, und
- Fig. 3: eine zweite Schnittansicht B-B einer erfindungsgemäßen Stellspindel.

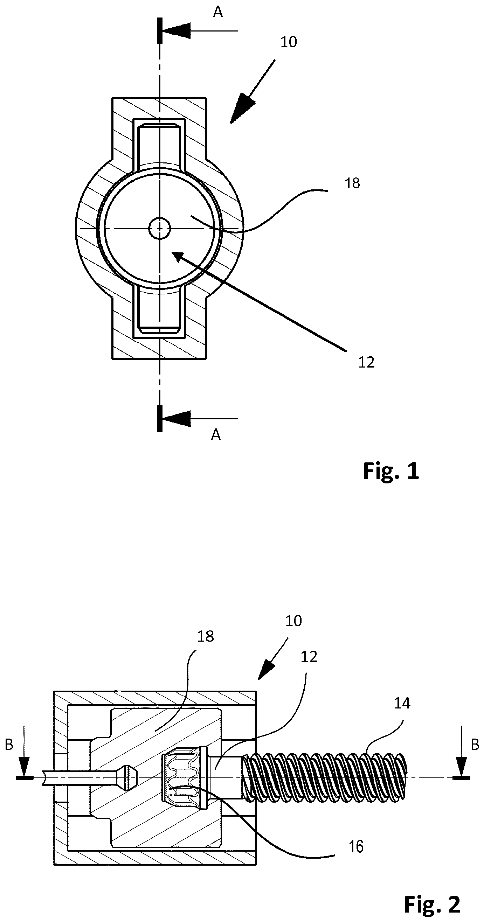

Fig. 1 zeigt eine Schnittansicht einer erfindungsgemäßen Spindelanordnung 10 umfassend eine Stellspindel 12 und ein Linearführungselement 18, durch welches die Stellspindel geführt ist. Die Stellspindel 12 weist Formschlussstrukturen auf, die als Flügelprofil ausgebildet sind und ein Verdrehen der Spindel gegenüber dem Linearführungselement 18 verhindern.

Fig. 2 zeigt eine Schnittansicht A-A einer erfindungsgemäßen Stellspindel 12 umfassend einen gewindetragenden Bereich 14 und eine Formschlussstruktur 16. Die Formschlussstruktur 16 ist als Flügelprofil ausgebildet und weist einen Überstand zum Schaft der Stellspindel 12 auf. An diese Formschlussstruktur 16 kann ein Führungselement zur Linearführung der Stellspindel 12 durch ein Urformverfahren angeformt, insbesondere angespritzt, werden. Aufgrund der Formschlussstruktur 16 ist das Führungselement sowohl in axialer Richtung als auch in Drehrichtung formschlüssig mit der Stellspindel 12 verbunden. Diese Ausgestaltung hat den Vorteil, dass die Stellspindel 12 aus einem metallischen Werkstoff einfach durch einen zweistufigen Umformprozess hergestellt werden kann.

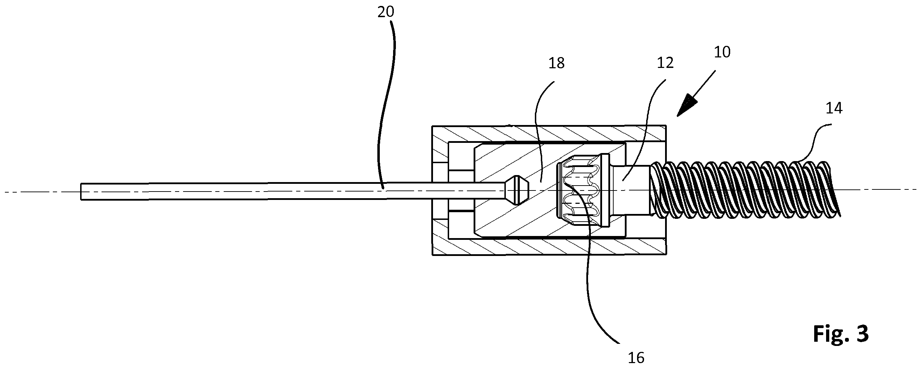

Fig. 3 zeigt eine erfindungsgemäße Spindelanordnung 10 umfassend eine metallische Stellspindel 12, wie sie in der Fig. 1 bereits beschrieben wurde. Die Stellspindel 12 ist mit einem Linearführungselement 18 an der Formschlussstruktur 16 umspritzt. Das Linearführungselement 18 umgreift gleichzeitig ein Betätigungsmittel, das in Form eines Seilzugs 20 ausgebildet ist und legt dieses ebenfalls formschlüssig fest. Der Drehantrieb eines Stellmotors treibt die Stellspindel 12 im gewindetragenden Bereich 14 an, welche durch das Linearführungselement 18 eine translatorische Bewegung ausführt, und durch den Seilzug 20, insbesondere einen Türschließer, betätigt wird. Durch die Umspritzung des Seilzugs 20 kann in einem Arbeitsgang das Linearführungselement 18 hergestellt werden und gleichzeitig der Seilzug 20 mit der Stellspindel 12 verbunden werden. So kann auf einfache Weise eine zuverlässige Stellspindelanordnung 10 bereitgestellt werden.

## Patentansprüche

1. Stellspindelanordnung (10) für einen Linearantrieb, umfassend eine gewindetragende Stellspindel (12) und ein Linearführungselement (18) zur Linearführung der Stellspindel (12), wobei an einem Ende der Stellspindelanordnung (10) ein Anschlussbereich zum Anschluss eines Betätigungsmittels (20) liegt, wobei der gewindetragende Bereich (14) der Stellspindel (12) aus Metall hergestellt ist, **dadurch gekennzeichnet, dass** das Linearführungselement (18) aus Kunststoff ausgeführt ist, wobei das Linearführungselement (18) als Spritzgussteil auf die Stellspindel (12) aufgespritzt ist und die Stellspindel (12) an ihrem Ende Formschlussstrukturen (16) aufweist, die mit dem Linearführungselement (18) in Eingriff stehen, wobei das Betätigungsmittel ein Seilzug (20), ist und der Seilzug (20), an seinem dem Anschlussbereich der Stellspindel (12) zugewandten Ende Formschlussstrukturen aufweist, die mit dem Linearführungselement (18) derart in Eingriff stehen, dass sich ein Formschluss in axialer Richtung ergibt, wobei die Formschlussstrukturen des Seilzugs (20), wenigstens teilweise mit umspritzt sind.

2. Stellspindelanordnung nach Anspruch 1 wobei die gewindetragende Stellspindel (12) und die Formschlussstruktur (16) materialeinheitlich, einstückig, ausgeführt sind.

3. Stellspindelanordnung nach einem der vorangehenden Ansprüche, wobei die Formschlussstruktur (16) in Form eines Mehrkantprofils oder Mehrflügelprofils ausgeführt ist.

4. Stellspindelanordnung nach einem der vorangehenden Ansprüche, wobei der gewindetragende Bereich (14) der Stellspindel (12) aus Stahl, insbesondere Edelstahl ist.

## Claims

1. Adjusting spindle arrangement (10) for a linear drive, comprising a threaded adjusting spindle (12) and a linear guide element (18) for linear guidance of the adjusting spindle (12), with a connection region for connection of an actuating means (20) being located on one end of the adjusting spindle arrangement (10), the threaded portion (14) of the adjusting spindle (12) being made of metal, **characterized in that** said linear guide element (18) is made of plastic, which linear guide element (18) is an injection-molded part that has been injected-molded onto said adjusting spindle (12), and said adjusting spindle (12) has positive locking structures (16) provided on its end that engage with said linear guide element (18), wherein said actuating means is a Bowden cable (20), and said Bowden cable (20), has, at its end facing the connection region of the actuating spindle (12), positive locking structures that are in engagement with said linear guide element (18) in such a way that a positive lock is produced in the axial direction, with at least part of said positive locking structures of said Bowden cable (20) being encapsulated by injection molding.

2. Adjusting spindle arrangement according to claim 1, wherein said threaded adjusting spindle (12) and said positive locking structure (16) are integrally formed from the same material.

3. Adjusting spindle arrangement according to any one of the preceding claims, wherein said positive locking structure (16) is in the form of a polygonal profile or a multi-wing profile.

4. Adjusting spindle arrangement according to any one of the preceding claims, wherein said threaded portion (14) of said adjusting spindle (12) is made of steel, in particular stainless steel.

## Revendications

1. Ensemble de broche de réglage (10) pour un entraînement linéaire, comprenant une broche de réglage (12) portant un filetage et un élément de guidage linéaire (18) pour le guidage linéaire de la broche de réglage (12), dans lequel à une extrémité de l'ensemble de broche de réglage (10) se situe une zone de raccordement pour le raccordement d'un moyen d'actionnement (20), dans lequel la zone (14) portant un filetage de la broche de réglage (12) est fabriquée à partir de métal, **caractérisé en ce que** l'élément de guidage linéaire (18) est conçu en plastique, dans lequel l'élément de guidage linéaire (18) est injecté en tant que pièce moulée par injection sur la broche de réglage (12) et la broche de réglage (12) présente à son extrémité des structures à coopération de formes (16), qui sont en prise avec l'élément de guidage linéaire (18), dans lequel le moyen d'actionnement est un câble de traction (20), et le câble de traction (20) présente à son extrémité tournée vers la zone de raccordement de la broche de réglage (12) des structures à coopération de formes, qui sont en prise avec l'élément de guidage linéaire (18), de telle sorte qu'il en résulte une coopération de formes dans la direction axiale, dans lequel les structures à coopération de formes du câble de traction (20) sont surmoulées au moins en partie.

2. Ensemble de broche de réglage selon la revendication 1,
dans lequel la broche de réglage (12) portant un filetage et la structure à coopération de formes (16) sont conçues dans le même matériau, d'une seule pièce.

3. Ensemble de broche de réglage selon l'une quelconque des revendications précédentes, dans lequel la structure à coopération de formes (16) est conçue sous forme d'un profil polygonal ou profil à plusieurs ailettes.

4. Ensemble de broche de réglage selon l'une quelconque des revendications précédentes, dans lequel la zone (14) portant un filetage de la broche de réglage (12) est en acier, en particulier acier inoxydable.
